Europäisches Patentamt

European Patent Office

Office européen des brevets

(11) Numéro de publication: **0 165 114**
**B1**

(12) FASCICULE DE BREVET EUROPEEN

(45) Date de publication du fascicule du brevet: **01.08.90**

(21) Numéro de dépôt: **85400884.4**

(22) Date de dépôt: **07.05.85**

(51) Int. Cl.⁵: **B 29 C 45/78,** B 29 C 45/73, G 05 D 23/24, H 05 B 1/02

(54) **Procédé et dispositif de régulation thermique pour moules à canaux chauds.**

(30) Priorité: **16.05.84 FR 8407602**

(43) Date de publication de la demande:
**18.12.85 Bulletin 85/51**

(45) Mention de la délivrance du brevet:
**01.08.90 Bulletin 90/31**

(84) Etats contractants désignés:
**AT BE CH DE GB IT LI LU NL SE**

(56) Documents cités:
**DE-A-2 427 532**
**FR-A-1 500 876**
**FR-A-2 503 891**
**GB-A-1 467 180**
**US-A-3 822 867**

(73) Titulaire: **ALBERT DENIS S.A.**
**Z.I. des Mardelles 44-54, rue Blaise Pascal**
**F-93601 Aulnay sous Bois (FR)**

(72) Inventeur: **Debeaud, Pierre R.**
**La Pierrelais Route de Combault**
**F-94510 La Queue En Brie (FR)**

(74) Mandataire: **Levesque, Denys et al**
**Cabinet Beau de Loménie 55, rue d'Amsterdam**
**F-75008 Paris (FR)**

Courier Press, Leamington Spa, England.

## Description

L'invention se rapporte tout d'abord à un procédé de régulation thermique pour moules à canaux chauds, suivant lequel on utilise, pour chacune des zones de chauffage définies dans les canaux d'amenée de la matière à mouler, un circuit de régulation de température commandant la puissance électrique appliquée à une résistance chauffante placée dans ladite zone en fonction de la valeur de la température mesurée par une sonde thermométrique, telle qu'un thermocouple, disposée dans cette même zone, tandis qu'un contrôle du bon fonctionnement de ladite sonde est effectué en permanence et que, en cas de défaillance de celle-ci, le circuit de régulation est mis dans un autre mode de fonctionnement permettant de poursuivre l'alimentation électrique de la résistance chauffante correspondante avec une puissance proportionnelle à la puissance d'alimentation de la résistance de chauffage d'une autre zone de chauffage. Un procédé de regulation de ce genre est décrit dans le document de brevet FR—A—1 500 876.

On sait que les pièces en matière thermoplastique injectée peuvent être obtenues par moulage dans des cavités ou empreintes, que vient remplir la matière plastique liquide après avoir parcouru un trajet à l'intérieur de canaux d'alimentation.

Si ces canaux ne sont pas chauffés, la matière plastique s'y solidifie, après moulage, en une carotte qui doit être éjectée en même temps que la pièce moulée, avant de pouvoir mouler une nouvelle pièce. Cette technique dite "à canaux froids" entraîne ainsi une perte de matière.

Depuis longtemps déjà, lorsque le nombre de pièces à mouler est élevé ou lorsque le poids de la carotte est important par rapport à la pièce, il est connu de chauffer les canaux, soit par l'extérieur, soit par l'intérieur, pour maintenir la matière plastique à l'état liquide jusqu'au point d'injection. Ainsi, la perte de matière due à la carotte est supprimée; de plus, le moule peut être automatisé plus facilement et la cadence de moulage accrue.

La mise en oeuvre de cette technique dite "à canaux chauds" a entraîné la mise au point de divers procédés de chauffage et par conséquent de régulation thermique. Il faut, en effet, assurer une température constante tout au long du trajet de la matière liquide, dont la longueur est plus ou moins grande selon le nombre d'empreintes dans le moule, la taille des pièces, etc.

La marge d'erreur acceptable sur la température le long du parcours de la matière liquide dépend de la nature de celle-ci. En effet, chaque matière thermoplastique est caractérisée par sa température de fusion et sa température de seuil de dégradation (température au delà de laquelle la matière plastique perd ses propriétés physiques ou chimiques). La température de moulage est donc impérativement contenue dans la plage définie ci-dessus, dont l'étendue varie, selon les matières, de 100°C environ à 15°C pour les matières les plus délicates.

Pour assurer la meilleure régularité de température dans des canaux chauds, ceux-ci sont subdivisés en plusieurs zones dotées de résistances chauffantes respectives qui sont alimentées séparément en courant électrique à l'aide de circuits de régulation individuels, sur la base d'informations de température de zones fournies par des sondes thermométriques respectivement associées aux résistances chauffantes.

Si l'une des sondes tombe en défaillance, la régulation thermique de la zone correspondante n'est plus assurée et la température de la matière plastique qui s'y trouve sort de la plage autorisée. Il y a donc risque de solidification dans cette zone, d'où obligation de démonter le moule, opération longue, parfois délicate et toujours coûteuse.

Pour remédier à cet inconvénient, il est connu de placer le circuit de régulation correspondant à la sonde défaillante en mode de fonctionnement manuel, où un opérateur règle ledit circuit pour commander l'application d'une puissance déterminée à la résistance chauffante. Mais cette puissance est fixe (au mieux ajustable à la main), et il n'y a plus de régulation thermique dans la zone considérée.

La présente invention a pour but de permettre la continuation du chauffage avec régulation thermique dans une zone dont la sonde est défaillante.

Le procédé selon l'invention est caractérisé en ce qu'il consiste essentiellement à faire passer automatiquement le circuit de régulation de la zone dont la sonde présente une défaillance dans un mode de fonctionnement où se poursuit une régulation thermique en puissance de chauffage par application à la résistance chauffante de cette zone d'une puissance électrique dont la valeur présente un écart en pourcentage constant avec une valeur de référence constituée par la valeur de la puissance appliquée à la résistance chauffante d'une autre zone déterminée, cet écart étant maintenu égal à celui qui existe entre les valeurs des puissances appliquées aux résistances chauffantes des deux zones considérées en régime d'équilibre lorsque tout fonctionne normalement.

Ainsi, selon le procédé défini ci-dessus, la zone en cause continue à être régulée automatiquement malgré la défaillance de sa sonde thermométrique, et ce par régulation en puissance, en remplacement de la régulation en température.

Afin d'obtenir dans ce second régime de fonctionnement une température de valeur proche de celle qui aurait été obtenue dans le régime initial de régulation en température, il convient de choisir, pour ladite autre zone fournissant une référence de puissance, une zone voisine ou homologue (par exemple de configuration symétrique) de la zone où la sonde est défaillante.

L'écart en pourcentage entre les deux valeurs de puissance peut être maintenu égal à celui qui existait à l'entrée en défaillance de ladite sonde. Mais, de préférence, il est maintenu égal à l'écart préalablement relevé et enregistré en régime d'équilibre, tout fonctionnant normalement. Cette dernière disposition présente l'avantage de permettre non seulement la régulation, mais la mise en température de tous les canaux à partir de la température ambiante malgré la défaillance d'une de leurs sondes.

Plusieurs sondes pouvant éventuellement tomber en panne, il convient de prévoir la possibilité de commutation automatique de chaque zone zur plusieurs autres zones suivant un ordre préétabli en vue de sa régulation en puissance de chauffage. Ainsi, le moule peut continuer à être régulé après plusieurs défaillances de sondes. A la limite, le moule pourrait fonctionner avec une seule sonde pilotant la régulation de toutes les zones de chauffage.

L'invention a également pour objet un dispositif de régulation thermique permettant de mettre en oeuvre le procédé précédemment défini. Ce dispositif comprend, pour chaque zone des canaux à chauffer, un circuit de régulation relié d'une part à une sonde thermométrique, telle qu'un thermocouple, placée dans la zone et d'autre part à une source de puissance alimentant en courant électrique une résistance chauffante placée également dans ladite zone en vue d'assurer la régulation de température de cette dernière, un dispositif de contrôle du bon fonctionnement de la sonde étant prévu. Selon l'invention, un dispositif de commutation est en outre prévu, qui, en cas de défaillance de la sonde constatée par le dispositif de contrôle, met en liaison l'entrée du circuit de régulation avec la sortie de la source de puissance d'une autre zone déterminée, et place le circuit de régulation relatif à la zone dont la sonde est défaillante dans un mode de fonctionnement tel qu'il applique à la résistance chauffante dont il assure l'alimentation une puissance présentant avec la puissance que reçoit la résistance chauffante de ladite autre zone un écart en pourcentage dont la valeur eest maintenue constante et égale à celle de l'écart qui existe entre les puissances respectivement appliquées aux deux résistances chauffantes en cause lorsque le dispositif de régulation fonctionne normalement et se trouve en régime d'équilibre.

Pour accroître encore la sécurité de fonctionnement, il convient que le dispositif de commutation relatif à chaque circuit de régulation soit susceptible de mettre l'entrée de celui-ci en liaison avec la source de puissance de l'une au choix parmi plusieurs autres zones. Ainsi, chaque zone peut recevoir, en cas de besoin, une référence de puissance de l'une de ces autres zones. A cet effet, le dispositif comprend de préférence une mémoire contenant pour chaque zone l'indication de la ou des autres zones avec lesquelles ladite zone peut être mise en liaison suivant un ordre préétabli en cas de défaillance de sa sonde. Il peut comprendre de même une mémoire contenant, pour chaque zone, le coefficient correcteur à appliquer respectivement à la puissance de référence qui peut lui fournir chaque autre zone pour obtenir la valeur de la puissance à appliquer à la résistance chauffante.

Dans une forme d'exécution préférée, le dispositif est doté d'un microprocesseur assurant notamment, pour l'ensemble des zones, les fonctions de contrôle des sondes, de mémorisation des coefficients correcteurs de puissance, ainsi que de commutation des circuits de régulation relativement aux modes de fonctionnement de ceux-ci et aux liaisons entre zones.

D'autres caractéristiques et avantages de l'invention ressortiront plus clairement de la description qui va suivre, en regard des dessins annexés, d'un exemple de réalisation non limitatif.

La figure 1 représente une vue en coupe simplifiée d'un moule à canaux chauds.

Les figures 2 et 3 représentent les courbes traduisant les variations, en fonction du temps, respectivement de la température et de la puissance de chauffage relatives aux différentes zones des canaux du moule au cours de la mise en température de celles-ci, puis en condition régulée d'équilibre thermique.

La figure 4 représente schématiquement la portion du dispositif de régulation correspondant à deux zones.

La figure 5 représente le diagramme fonctionnel des éléments de la figure 4 après défaillance de la sonde thermométrique de l'une des zones.

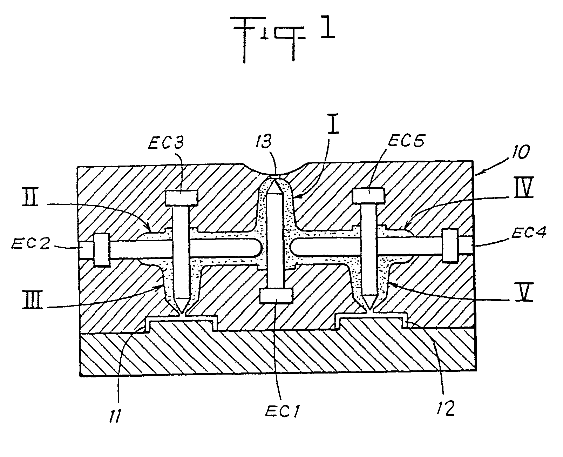

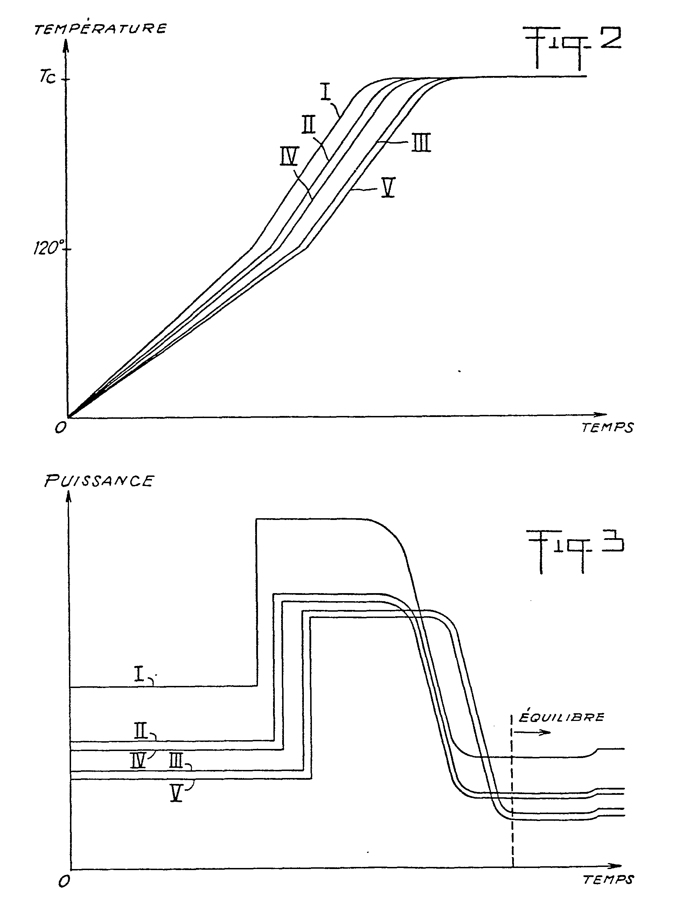

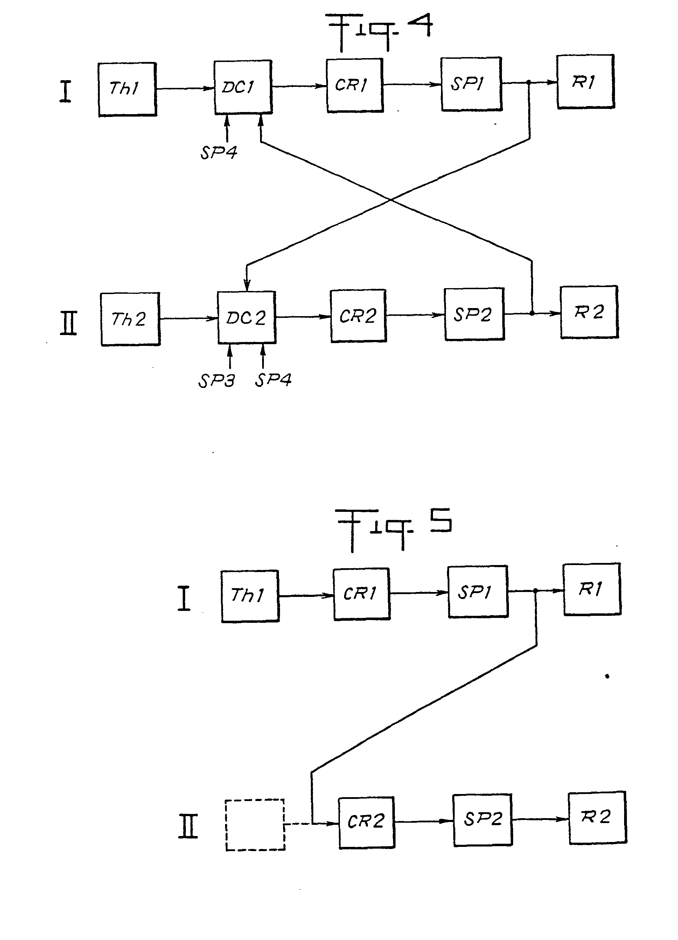

On voit sur la figure 1 un moule 10 à deux empreintes 11, 12 alimentées par des canaux d'amenée de la matière thermoplastique de moulage à partir d'un orifice d'entrée 13 relié à une presse à injecteur. Afin d'éviter la formation de carottes de matière solidifiée dans ces canaux, ceux-ci sont chauffés au moyen d'éléments chauffants électriques. Les canaux d'amenée sont divisés à cet effet en cinq zones I à V, chacune d'elles étant dotée d'un élément chauffant EC1 à EC5 particulier. Chaque élément chauffant, qui contient, dans un tube de protection, une résistance électrique R1 à R5 et un thermocouple Th1 à Th5, est associé (figure 4) à un circuit de régulation CR1 à CR5 commandant, en fonction des inforations de température reçues du thermocouple correspondant, une source de puissance SP1 à SP5 qui applique un courant électrique à la résistance chauffante correspondante de valeur telle que la température de la zone se maintienne à un niveau de consigne prédéterminé.

Chaque source SP1 à SP5 fournit un courant électrique alternatif dont la valeur efficace est modulée soit par découpage en trains d'ondes, soit par fractionnement des alternances, soit par suppression de demi-alternances négatives et, si besoin est, positives.

Dans une phase initiale de préchauffage (figures 2 et 3), les cinq résistances R1 à R5 sont alimentées à demi-puissance environ, jusqu'à ce que la température des cinq zones atteigne une valeur prédéterminée égale dans le présent exemple à 120°C. Puis les résistances reçoivent un courant correspondant à leur puissance nominale respective. Cette seconde phase prend fin à l'atteinte d'un équilibre où les températures des différentes zones I à V ont atteint leur valeur de consigne Tc. A partir de ce moment s'effectue la régulation thermique dans chaque zone à partir des mesures de température fournies par les thermocouples respectifs.

Dans la phase de régulation, les puissances appliquées aux différentes résistances chauffantes peuvent varier essentiellement pour compenser d'éventuelles évolutions des conditions externes au moule: température ambiante, température de la matière plastique à son entrée dans le moule, cadence de moulage, etc. Il en résulte que les courbes de variation des puissances de chauffage sont, dans cette phase, homothétiques. On peut ainsi observer que, si la puissance de chauffage de la zone V augmente de 10% en passant par exemple de 100 à 110 W, la puissance de chauffage de la zone III, symétrique de la zone V, augmente également de 10% en passant par exemple de 120 à 132 W. Autrement dit, en régime d'équilibre, les puissances appliquées aux diverses résistances chauffantes peuvent varier, mais en conservant entre elles des rapports constants, par exemple un rapport 2/1,5 entre les zones I et II, 1,2/1 entre les zones III et V, etc. Ceci est vrai avec une très faible marge d'erreur, car le moule en équilibre forme un tout et seules des influences extérieures modifient cet équilibre et, par conséquent, les puissances nécessaires pour maintenir la température identique dans toutes les zones, chaque variation d'un paramètre extérieur déterminé entraînant une modification des puissances de chauffage dans la même proportion.

Entre le circuit de régulation CR relatif à chaque zone et le thermocouple Th correspondant est interposé un dispositif de commutation DC (figure 4). Celui-ci assure, en cas de défaillance dudit thermocouple, la commutation du circuit de régulation sur la sortie de la source de puissance SP d'une autre zone et l'introduction dans ce circuit d'un coefficient correcteur de puissance, de sorte que la régulation n'est pas interrompue par cette défaillance, mais continue avec maintien du rapport des puissances constamment égal à la valeur constatée entre les deux zones en cause. Cette valeur a été mesurée et enregistrée préalablement pour chaque zone tandis que le chauffage de la totalité des zones I à V fonctionnait normalement avec régulation de température.

Ainsi, comme le montre la figure 5, si le thermocouple de la zone II vient à tomber hors d'usage, le circuit de régulation CR2 est automatiquement commuté sur la sortie de la source de puissance SP1 de la zone I. L'information de température manquante est remplacée par une information de puissance, savoir la valeur de la puissance délivrée par SP1. La régulation thermique se poursuit donc dans la zone II, s'agissant maintenant d'une régulation en puissance et non plus en température.

Pour plus de sécurité, comme représenté sur la figure 4 pour les éléments de régulation relatifs aux zones I et II, le dispositif de commutation DC de chaque zone I à V est relié aux sorties des sources de puissance SP de plusieurs autres zones, la commutation en cas de défaillance sur une zone s'effectuant suivant un ordre de priorité préétabli entre les autres zones. Ainsi, le circuit de régulation de la zone I peut être mis en liaison avec la source de puissance de la zone II ou de la zone IV (voisines de la zone I), et celui de la zone II avec la source de puissance de la zone I ou de la zone III (voisines de la zone II) ou encore de la zone IV (symétrique de la zone II). D'une manière générale, on choisit pour une zone appelée à fournir une référence subsidiaire à une zone déterminée une zone répondant aux influences extérieures à peu près de la même manière que la zone secourue.

L'utilisation d'un microprocesseur est particulièrement indiquée pour la réalisation d'un dispositif de régulation selon l'invention. Elle permet notamment de réaliser:

—la mise en mémoire automatique des puissances consommées zone par zone lorsque le moule est en état d'équilibre thermique;

—la commutation automatique d'une zone à thermocouple défaillant en fonctionnement piloté par une zone voisine dont le thermocouple fonctionne normalement, avec application automatique du coefficient correcteur de puissance résultant de l'écart en pourcentage des puissances à l'équilibre mémorisées.

**Revendications**

1. Procédé de régulation thermique pour moules (10) à canaux chauds, suivant lequel on utilise, pour chacune des zones de chauffage (I—V) définies dans les canaux d'amenée de la matière à mouler, un circuit de régulation de température (CR) commandant la puissance électrique appliquée à une résistance chauffante (R) placée dans ladite zone en fonction de la valeur de la température mesurée par une sonde thermométrique (Th), telle qu'un thermocouple, disposée dans cette même zone, tandis qu'un contrôle du bon fonctionnement de ladite sonde est effectué en permanence et que, en cas de défaillance de celle-ci, le circuit de régulation (CR) est mis dans un autre mode de fonctionnement permettant de poursuivre l'alimentation électrique de la résistance chauffante correspondante avec une puissance proportionnelle à la puissance d'alimentation de la résistance chauffante d'une autre zone de chauffage, le procédé étant caractérisé par le fait qu'il consiste essentiellement à faire passer automatiquement le circuit de régulation (CR) de la zone dont la sonde (Th) présente une défaillance dans un mode de fonctionnement où se poursuit une régulation thermique en puissance de chauffage par application à la résistance chauffante de cette zone d'une puissance électrique dont la valeur présente un écart en pourcentage constant avec une valeur de référence constituée par la valeur de la puissance appliquée à la résistance chauffante d'une autre zone déterminée, cet écart étant maintenu égal à celui qui existe entre les valeurs des puissances appliquées aux résistances chauffantes (R) des deux zones considérées en régime d'équilibre lorsque tout fonctionne normalement.

2. Procédé selon la revendication 1, caractérisé par le fait que pour ladite autre zone est choisie une zone voisine ou homologue de la zone à laquelle elle est susceptible de fournir une référence de puissance.

3. Procédé selon la revendication 1 ou 2, caractérisé par le fait que l'écart en pourcentage entre les deux valeurs de puissance est maintenu égal à celui qui existait à l'entrée en défaillance de ladite sonde.

4. Procédé selon la revendication 1 ou 2, caractérisé par le fait que l'écart en pourcentage entre les deux valeurs de puissance est maintenu égal à celui préalablement relevé et enregistré en régime d'équilibre, tout fonctionnant normalement.

5. Procédé selon l'une quelconque des revendications 1 à 4, caractérisé par la possibilité de commutation automatique de chaque zone sur plusieurs autres zones suivant un ordre préétablie en vue de sa régulation en puissance de chauffage.

6. Dispositif de régulation thermique permettant de mettre en oeuvre le procédé selon l'une quelconque des revendications 1 à 5, comprenant, pour chaque zone des canaux à chauffer, un circuit de régulation (CR) relié d'une part à une sonde thermométrique (Th), telle qu'un thermocouple, placée dans la zone etr d'autre part à une source de puissance (Sp) alimentant en courant électrique une résistance chauffante (R) placée également dans ladite zone en vue d'assurer la régulation de température de cette dernière, un dispositif de contrôle du bon fonctionnement de la sonde étant prévu, ainsi qu'un dispositif de commutation permettant, en cas de défaillance de la sonde constatée par le dispositif de contrôle, d'assurer l'alimentation de celle-ci avec une puissance proportionnelle à la puissance d'alimentation de la résistance chauffante d'une autre zone de chauffage, le dispositif étant caractérisé par le fait que le dispositif de commutation (DC) est conçu pour mettre en liaison l'entrée du circuit de régulation (CR) avec la sortie de la source de puissance (SP) d'une autre zone déterminée, et placer le circuit de régulation (CR) relatif à la zone dont la sonde (Th) est défaillante dans un mode de fonctionnement tel qu'il applique à la résistance chauffante (R) dont il assure l'alimentation une puissance présentant avec la puissance que reçoit la résistance chauffante de ladite autre zone un écart en pourcentage dont la valeur est maintenue constante et égale à celle de l'écart qui existe entre les puissances respectivement appliquées aux deux résistances chauffantes en cause lorsque le dispositif de régulation fonctionne normalement et se trouve en régime d'équilibre.

7. Dispositif selon la revendication 6, caractérisé par le fait que le dispositif de commutation (DC) relatif à chaque circuit de régulation (CR) est susceptible de mettre l'entrée de celui-ci en liaison avec la source de puissance (SP) de l'une au choix parmi plusieurs autres zones.

8. Dispositif selon la revendication 7, caractérisé par le fait qu'il comprend une mémoire contenant pour chaque zone l'indication de la ou des autres zones avec lesquelles ladite zone peut être mise en liaison suivant un ordre préétabli en cas de défaillance de sa sonde.

9. Dispositif selon la revendication 7 ou 8, caractérisé par le fait qu'il comprend une mémoire contenant, pour chaque zone, le coefficient correcteur à appliquer respectivement à la puissance de référence que peut lui fournir chaque autre zone.

10. Dispositif selon les revendications 8 et 9, caractérisé par le fait qu'il est doté d'un microprocesseur assurant notamment, pour l'ensemble des zones, les fonctions de contrôle des sondes de mémorisation des coefficients correcteurs de puissance, ainsi que de commutation des circuits de régulation relativement aux modes de fonctionnement de ceux-ci et aux liaisons entre zones.

**Patentansprüche**

1. Verfahren zur thermischen Regelung von Heißkanal-Spritzwerkzeugen (10), bei dem für jeden Heizbereich (I—V), der in den Zufuhrkanälen für das zu spritzende Material vorgesehen ist, eine Temperaturregelschaltung (CR) verwendet wird, die die an einen Heizwiderstand (R) in dem Bereich in Abhängigkeit von dem von einer Thermosonde (Th), wie z.B. einem in diesem Bereich angeordneten Thermoelement, gemessenen Temperaturwert angelegte elektrische Leistung regelt, während eine Kontrolle des einwandfreien Betriebs der Sonde ständig durchgeführt wird und beim Ausfall dieser Sonde die Regelschaltung (CR) in einen anderen Betriebszustand geschaltet wird, der die Stromzufuhr des Heizwiderstandes mit einer Leistung gewährleistet, die proportional zur Zufuhrleistung an einen anderen Heizwiderstand in einem anderen Heizbereich ist, dadurch gekennzeichnet, daß im wesentlichen die Regelschaltung (CR) des Bereichs, in dem die Sonde (Th) eine Betriebsstörung aufweist, in eine Betriebsweise umgeschaltet wird, in der eine thermische Heizleistungsregelung durch Anlegen einer elektrischen Leistung an den Heizwiderstand dieses Bereichs erfolgt, deren Wert einen prozentual konstanten Unterschied zu einem Bezugswert aufweist, der von dem Leistungswert gebildet wird, der an den Heizwiderstand eines anderen bestimmten Bereichs angelegt ist, wobei dieser Unterschied gleich dem Unterschied gehalten wird, der zwischen den Leistungswerten besteht, die an die Heizwiderstände (R) zweier Bereiche angelegt sind, die als sich während des Normalbetriebs im Gleichgewicht befindlich angesehen werden.

2. Verfahren nach Anspruch 1, dadurch gekennzeichnet, daß als weiterer Bereich ein benachbarter Bereich oder ein zu der Zone vergleichbarer Bereich ausgewählt wird, der in der Lage ist einen Leistungsbezugswert zu liefern.

3. Verfahren nach Anspruch 1 oder 2, dadurch gekennzeichnet, daß der prozentuale Unterschied zwischen den beiden Leistungswerten gleich dem Unterschiedswert gehalten wird, der bei Eintritt der Störung der Sonde bestanden hat.

4. Verfahren nach Anspruch 1 oder 2, dadurch gekennzeichnet, daß der prozentuale Unterschied zwischen den beiden Leistungswerten gleich dem Wert gesetzt wird, der im Gleichgewichtszustand während des normalen Betriebs erfaßt und gespeichert wurde.

5. Verfahren nach einem der Ansprüche 1 bis 4, dadurch gekennzeichnet, daß die Möglichkeit einer automatischen Vertauschung jedes Bereichs mit anderen Bereichen nach einer vorbestimmten Reihenfolge zur Regelung der Heizleistung vorgesehen ist.

6. Thermische Regelvorrichtung zur Durchführung des Verfahrens nach einem der Ansprüche 1 bis 5, mit einer Regelschaltung (CR) für jeden Bereich der zu heizenden Kanäle, die einerseits mit einer Temperatursonde (Th) verbunden ist, wie beispielsweise einem Thermoelement, das in dem Bereich angeordnet ist und andererseits mit einer elektrischen Speisequelle (SP), die einen Heizwiderstand (R) mit Strom versorgt, der ebenfalls in dem Bereich angeordnet ist um die Temperaturregelung dieses Bereichs sicherzustellen, mit einer Kontrollvorrichtung des Funktionierens der Temperatursonde sowie mit einer Umschaltvorrichtung, die es erlaubt bei durch die Kontrollvorrichtung festgestelltem Ausfall der Sonde die Leistungsspeisung mit einer Leistung sicherzustellen, die proportional der Speiseleistung des Heizwiderstandes eines anderen Heizbereichs ist, dadurch gekennzeichnet, daß die Umschaltvorrichtung (DC) so ausgestaltet ist, daß sie den Eingang der Regelschaltung (CR) mit dem Ausgang der Speisequelle (SP) eines bestimmten anderen Bereichs verbindet und die Regelschaltung (CR) bezüglich des Bereichs, dessen Sonde (Th) ausgefallen ist, in eine Betriebsart schaltet, so daß an den Heizwiderstand (R) eine Leistung angelegt wird, die mit der Leistung des Heizwiderstands des anderen Bereichs einen prozentualen Unterschied aufweist, dessen Wert konstant gehalten wird und zwar gleich dem Unterschied, der zwischen der jeweiligen an zwei Heizwiderstände angelegten Leistungen besteht, während die Regelvorrichtung normal funktioniert und sich im Gleichgewichtszustand befindet.

7. Vorrichtung nach Anspruch 6, dadurch gekennzeichnet, daß die Schaltvorrichtung (DC) für jede Regelschaltung (CR) in der Lage ist den Eingang der Regelschaltung wahlweise mit der Leistungsquelle (SP) einer von mehreren anderen Bereichen zu verbinden.

8. Vorrichtung nach Anspruch 7, gekennzeichnet durch einen Speicher, der für jeden Bereich die Angabe des oder der anderen Bereichs bzw. anderen Bereiche enthält, mit denen der Bereich beim Ausfall seiner Sonde in einer vorbestimmten Reihenfolge verbunden werden kann.

9. Vorrichtung nach Anspruch 7 oder 8, gekennzeichnet durch einen Speicher, der für jeden Bereich den Korrekturkoeffizienten enthält, der jeweils auf die Bezugsleistung angewendet werden muß, die jeder andere Bereich liefert.

10. Vorrichtung nach den Ansprüchen 8 und 9, gekennzeichnet durch einen Mikroprozessor, der insbesondere für die Gesamtheit der Bereiche die Kontrollfunktionen der Sonden und das Speichern der Leistungskorrekturkoeffizienten sowie das Umschalten der Regelschaltungen je nach Betriebsarten der Schaltungen und je nach Verbindungen zwischen den Bereichen gewährleistet.

**Claims**

1. Heat control method for hot runner molds (10), in which, for each of the heating zones (I—V) defined in the feed runners of the material to be molded, a temperature control circuit (CR) is used which circuit controls the electric power applied to a heating element (R) placed in the said zone as a function of the value of the temperature measured by a thermometric probe (Th), such as a thermocouple, placed in such zone, whereas the correct functioning of said probe is continuously monitored and, in the event of such probe failing, the control circuit (CR) is switched to another mode of operation which makes it possible to continue supplying electric energy to the corresponding heating element with a power which is proportional to the supply power of the heating element of another heating zone, method characterized by the fact that it consists essentially in automatically switching the control circuit (CR) of the zone of which the probe (Th) has failed to a mode of operation where a heat control in terms of heating power is continued by applying to the heating element of such zone an electric power, of which the value shows a constant percentage deviation from a reference value constituted by the value of the power applied to the heating element of another determined zone, such deviation being maintained equal to that which exists between the values of the powers applied to the heating elements (R) of the two zones in question in conditions of equilibrium, when everything is operating normally.

2. Method according to claim 1, characterized by the fact that for the said other zone, a zone is selected, which is adjacent or corresponding to the zone to which it may supply a power reference.

3. Method according to claim 1 or 2, charterized by the fact that the percentage deviation between the two power values is maintained equal to that which existed when the said probe initially failed.

4. Method according to claim 1 or 2, characterized by the fact that the percentage deviation between the two power values is maintained equal to that which has previously been noted and recorded in equilibrium conditions, when everything is operating normally.

5. Method according to any one of claims 1 to 4, characterized by the possibility of automatically switching each zone to a plurality of other zones according to a predetermined order to control it in terms of heating power.

6. Heat control device for carrying out the method according to any one of claims 1 to 5, comprising, for each zone of the runners to be heated, a control circuit (CR) which is connected, on the one hand, to a thermometric probe (Th), such as a thermocouple, placed in the zone and, on the other hand, to a power source (SP) supplying electric current to a heating element (R) which is also placed in said zone in order to control the temperature thereof, a device for monitoring the correct operation of the probe being provided, as well as a switching device which, in the event of a failure of the probe recorded by the monitoring device, makes it possible to supply such probe with a power proportional to the supply power of the heating element of another heating zone, the device being characterized by the fact that the switching device (DC) is designed to connect the inlet of the control circuit (CR) with the outlet of the power source (SP) of another predetermined zone, and place the control circuit (CR) relating to the zone of which the probe (Th) has failed, in an operating mode such that it applies to the heating element (R) which it is supplying, a power which shows a percentage deviation from the power received by the heater element of the said other zone, of which the value is kept constant and equal to that of the deviation existing between the powers applied respectively to the two heating elements in question when the control device is operating normally and is in a situation of equilibrium.

7. Device according to claim 6, characterized by the fact that the switching device (DC) relating to each control circuit (CR) is able to connect its input to the power source (SP) of any one of a plurality of other zones.

8. Device according to claim 7, characterized by the fact that it comprises a memory which contains, for each zone, an indication of the other zone or zones with which said zone may be connected according to a predetermined order in the event of the failure of its probe.

9. Device according to claim 7 or 8, characterized by the fact that it comprises a memory which contains, for each zone, the correction coefficient to be applied respectively to the reference power which may be supplied to it by each other zone.

10. Device according to claims 8 and 9, characterized by the fact that it is fitted with a microprocessor which, for all of the zones, is responsible, in particular, for the functions of monitoring the probes, of memorizing the power correction coefficients, and of switching the control circuits with respect to the mode of operation of such control circuits and the inter-zone connections.

# Fig 1

TEMPÉRATURE

Fig. 2

$T_C$

I

II

IV

III

V

120°

O

TEMPS

PUISSANCE

Fig. 3

I

II

IV  III

V

ÉQUILIBRE

O

TEMPS

# Fig. 4

# Fig. 5